# EUROPÄISCHE PATENTSCHRIFT

(11) **EP 0 793 570 B1**
(45) Veröffentlichungstag und Bekanntmachung des Hinweises auf die Patenterteilung: **04.11.1998**
(21) Anmeldenummer: 95941014.3
(22) Anmeldetag: 24.11.1995
(51) Int. Cl.: B29C 51/14, B29C 51/10

(54) **VERFAHREN ZUR HERSTELLUNG EINES KASCHIERTEN WARMFORMTEILS**
METHOD OF MANUFACTURING A LINED HOT-FORMED ARTICLE
PROCEDE DE FABRICATION D'UNE PIECE FORMEE A CHAUD DOUBLEE

(30) Priorität: 25.11.1994 DE 4441986; 26.05.1995 EP 95108064
(43) Veröffentlichungstag der Anmeldung: 10.09.1997
(73) Patentinhaber: Reiss International GmbH, 88069 Tettnang (DE)
(72) Erfinder: WISSING, Gerhard, D-88085 Langenargen (DE)
(74) Vertreter: Dreiss, Fuhlendorf, Steimle & Becker, Patentanwälte
(86) Internationale Anmeldenummer: EP9504641
(87) Internationale Veröffentlichungsnummer: WO9616788

(56) Entgegenhaltungen:
- EP-A- 0 547 664
- FR-A- 2 486 872
- US-A- 3 446 686
- US-A- 3 576 703
- US-A- 4 740 417
- US-A- 4 888 234
- PATENT ABSTRACTS OF JAPAN vol. 010 no. 073 (M-463) ,22.März 1986 & JP,A,60 217129 (MITSUI TOATSU KAGAKU KK) 30.Oktober 1985,

## Beschreibung

Die Erfindung betrifft ein Verfahren zum Herstellen eines kaschierten Warmformteils bestehend aus einem warmverformbaren, thermoplastischen Kunststoff, Kunststoffgemische oder einer Kunststoffmatix als tragendem Werkstoff des Warmformteils und mindestens einem verformbaren Kaschiermaterial.

Derzeit mögliche und bekannte Verfahren, bei denen die Kaschierung insbesondere zur Verbesserung des optischen Eindrucks oder der thermischen Isolation erfolgt, und bei denen als Kaschiermaterial Folien, Vliese, Textilien oder Schäume verwendet werden, sind unter anderem das nachträgliche Kaschieren eines Trägerteiles unter Verwendung von zusätzlichem Kleberauftrag, das direkte Hinterspritzen im Niederdruckverfahren, das direkte Hinterprägen im Spritzprägeverfahren, das direkte Hinterschäumen im Schäumverfahren und das Thermoformpressen.

Weitere derzeit mögliche und bekannte Verfahren, bei denen auf bzw. in den Kunststoff metallische und/oder elektrische leitfähige Strukturen aufgebracht werden, insbesondere zur Verbesserung oder Herstellung einer elektromagnetischen Abschirmung, sind u.a. die nachträgliche Integration eines Metallgewebes durch Sonderkonstruktionen in das Gesamtbauteil, durch Verarbeitung von leitfähigen Polymeren im Spritzgießverfahren, durch Beschichten mit Leitlacken, durch Auskleidung mit metallischen Folien, durch Bedampfen mit Aluminium oder durch elektrochemische/galvanotechnische Beschichtung.

Ferner ist ein tiefziehfähiges Abschirmmaterial als Mehrverbund-Material aus EVA-Faservlies und Metallfaservlies speziell für die EMI-Abschirmung auf dem Markt erhältlich, bei dem das EVA-Faservlies als Heißschmelzkleber fungiert und das Metallfaservlies aus einer Legierung besteht, die bei der Verarbeitung schmilzt.

Aus dem deutschen Gebrauchsmuster G 92 16 080.8 ist ein Tiefziehteil aus warmverformbaren, thermoplastischen Kunststoff, Kunststoffgemisch oder einer Kunststoffmatix bekannt, das aus einem faserverstärkten Polypropylen oder Polyäthylen oder einem entsprechenden Copolymer besteht, bekannt.

Durch die in diesem Gebrauchsmuster beschriebenen Eigenschaften findet dieses Tiefziehteil breite Anwendungsgebiete, auch dort, wo neben der technischen Funktion auch optische und dekorative Anforderungen und/oder geräuschdämmende, isolierende, elektrische, elektromagnetische oder Stabilitätsanforderungen bestehen, die ohne zusätzliche Oberflächenbehandlung nicht zu erfüllen sind.

Aus der US-A-4,740,417 ist Tiefziehverfahren bekannt, bei dem die Kaschierbahn vorzugsweise mit einem Schaum versehen ist und wobei die Kombination aus beiden ausreichend luftdurchlässig sein muß.

Aus der deutschen Patentanmeldung DE-A-42 11 077 ist eine Verfahren zur Herstellung eines Formteils mit strukturierter Oberfläche bekannt, bei dem in eine Tiefziehform zunächst ein Dekorträger eingelegt, eine Kunststoffplatte zum Ziehen eines Formteil eingebracht, auf Verformungstemperatur erwärmt und danach mittels Unterdruck im Bereich der Tiefziehform in die Form gezogen wird. Dabei soll die dem Kunststofformteil zugekehrte Seite zumindest teilweise materialschlüssig in der Oberflächenschicht des Kunststofformteils angebunden werden.

Nachteilig bei diesem Verfahren ist, daß diese materialschlüssige Verbindung nicht in allen Anwendungsfällen in ausreichendem Maße erreicht werden kann. Insbesondere bei größeren Verformungen, wie tiefen Wannen, und schwieriger Formteilgeometrie, wie Hinterschnitte, wird die geforderte Ausformung und/oder Verbindung nicht zuverlässig erreicht. Weiterhin ist das bekannte Verfahren bei Dekormaterialien mit geringer oder keiner Luftdurchlässigkeit nicht zuverlässig anwendbar, da unkontrollierbare Lufteinschlüsse zwischen Kunststofftafel und Dekormaterial verbleiben können.

Es ist Aufgabe der Erfindung, ein kostengünstiges Verfahren zur einfachen Herstellung von wenigstens einseitig kaschierten Warmformteilen aus warmverformbarem, thermoplastischen Kunststoffmaterial anzugeben bei dem eine zuverlässige Verbindung zwischen der verformten Kunststofftafel und der Kaschierbahn erreicht wird und welches sich sowohl für Kaschiermaterialien für Dekor- oder Isolationszwecke als auch aus Metall oder andere hochfeste Materialien eignet.

Diese Aufgabe löst die Erfindung dadurch, daß vor dem Warmformvorgang in den Raum zwischen der Kunststofftafel und einer Tiefziehform wenigstens eine verformbare Kaschierbahn eingebracht wird, wobei die verformbare Kaschierbahn aus einem Material besteht, das sich unter den beim Warmformvorgang auftretenden Druck- und Temperaturbedingungen streckt und/oder aus einem Material besteht, das sich selbst unter den beim Warmformvorgang auftretenden Druck- und Temperaturbedingungen nicht streckt, jedoch durch seine Vermaschung oder Winkellageveränderung flächig verformbar ist und daß die Druck- und Temperaturbedingungen des Warmformvorganges so eingestellt werden, daß sich Kunststofftafel und Kaschierbahn direkt durch Einlagerung oder Verschmelzung unlösbar miteinander verbinden, wobei der Anpressdruck durch zusätzliche Druckluftunterstützung erhöht wird.

Die Erfindung geht dabei von der Erkenntnis aus, daß für die aufzubringende Kaschierbahn grundsätzlich zwischen zwei Werkstoffarten unterschieden werden kann.

Solche Materialien, die unter den beim Warmformvorgang auftretenden Druck- und Temperaturbedingungen selbst dehn- und streckbar sind, wobei die möglichen Grenzen der Druck- und Temperaturbedingungen sowohl vom Material der Trägerplatte als auch vom Kaschiermaterial bestimmt sein können.

Andere Materialien wie beispielsweise Metalle, einschließlich Metallegierungen, Glas- oder Kohlestofffasern, werden in der Regel erst bei Temperaturen dehn- oder streckbar, die über den Grenzen der Verarbeitungstemperatur einer Trägerplatte liegen. Für die Verwendung solcher Materialien ist aber nicht notwendigerweise eine dehn- oder streckbarkeit des Materials selbst erforderlich, sondern es sind Kaschierbahnen aus anderen Anwendungen verfügbar bzw. herstellbar, die durch ihre Flächenstruktur verformbar sind. Dabei handelt es sich insbesondere um Metallfadengewebe, die durch ihre Maschenform in der Fläche dehnbar sind, sowie um Metalldrahtbahnen bei denen die Drähte in vorgegebenem Winkel zueinander liegen, und die Flächendehnbarkeit während der Verarbeitung durch Änderung der Winkel möglich ist.

Beide Materialarten können auch in Mischform auftreten, beispielsweise als Mischgewebe von Baumwolle mit eingewebten oder eingestrickten Metallfäden.

Beide Materialien, sowie Mischformen lassen sich nach dem erfindungsgemäßen Verfahren unlösbar mit der Trägertafel verbinden, wenn die Druck- und Temperaturbedingungen des Warmformvorganges so eingestellt werden, daß sich die Kaschierbahn in die Trägertafel einlagert oder mit ihr verschmilzt, wobei es sich beim Warmformvorgang vorzugsweise um Tiefziehen handelt.

Durch die zusätzliche Druckluftunterstützung wird eine bessere Abformgenauigkeit des Verbundes von Kunststofftafel und Kaschierbahn erreicht, die Hinterschnitte und 90°-Umbug ermöglicht, da der Verbund mit erheblich höheren Kräften in die Tiefziehform gepreßt wird. Dies geht einher mit einer durch diese höheren Kräfte verursachten zuverlässigeren Verankerung der Kaschierbahn in der Oberfläche der Kunststofftafel. Weiterhin können höhere Streck- und Dehnkräfte auf das Material bzw. die Struktur der Kaschierbahn ausgeübt werden, wodurch ebenfalls die Abformgenauigkeit verbessert wird.

Auch für Kaschierbahnen mit geringer oder keiner Luftdurchlässigkeit wird die Zuverlässigkeit der materialschlüssigen Verbindung erhöht.

Für Kaschiermaterialien mit hoher Durchlässigkeit, wie z.B. dünne Textilien, bei denen nur eine kontrollierte Eindringtiefe in die Oberfläche der Kunststofftafel auftreten darf, ist das erfindungsgemäße Verfahren, insbesondere bei komplexer Formgebung, besonders geeignet. Das Verfahren erlaubt es, abhängig von den verwendeten Materialien, die für die Abformung, insbesondere komplexer Formbereiche, und die Eindringtiefe ursächlichen Parameter Anpressdruck und Temperatur der Kunststofftafel in einem erweiterten Bereich für den Anpressdruck zu variieren und zu optimieren. So kann bei gleichbleibender Abformbarkeit durch geringere Temperatur verbunden mit höherem Anpressdruck, das durch die temperaturabhängige Fließfähigkeit verursachte Eindringen verringert werden.

Entsprechendes gilt hier für Kaschiermaterialien aus Metall oder anderen hochfesten Materialien, die nicht mit der Kunststofftafel verschmelzen, sonderen durch gezielten Grad der Einlagerung haften.

Zur Zeit vorhandene Geräte lassen eine Druckluftunterstützung von bis zu 16 bar zu, wobei vorzugsweise, unter anderem von der Größe des Formteils und den dadurch auftretenden Kräften abhängig, eine Druckluftunterstützung zwischen 0,5 und 10 bar Anwendung findet.

Das Verfahren ist sowohl für die vollständige, flächendeckende Kaschierung von Warmformteilen als auch für die Kaschierung von Teilen der Oberfläche geeignet.

Durch die schonende Aufbringung der Kaschierbahn beim Warmformen im Druckbereich von 0,5 bar bis max. ca. 10 bar (Überdruck), werden ausgezeichnete Qualitätsmerkmale, eine gute Erhaltung des textilen weichen Charakters und eine gute Farbkonstanz des Dekormateriales erreicht.

Die vorgenannten Möglichkeiten können in einer Weiterbildung der Erfindung dadurch unterstützt werden, daß die Kaschierbahn zumindest einseitig vor dem Tiefziehvorgang soweit vorgewärmt wird, daß eine deutliche Herabsetzung des E-Moduls auftritt, d.h. eine deutlich verbesserte Streck- und Dehnfähigkeit, jedoch keine anderen wesentlichen Materialeigenschaften verändert werden. D.h. die Erwärmung soll insbesondere bei teilkristallinen Kunststoffen unterhalb des Kristalit-Schmelzpunktes (bei Polypropylen < 130-140°C bei Polyester <220°C) bleiben, um auch noch eine ausreichende Farbkonstanz zu gewährleisten.

Durch diese dem Warmformvorgang vorausgehende zumindest einseitige Erwärmung der Kaschierbahn, kann erreicht werden, daß die Kaschierbahn überhaupt erst verformbar wird, bzw. deren Verformbarkeit verbessert wird, sodaß sich die Kaschierbahn ohne Faltenbildung oder Rissbildung an die Tiefziehform anschmiegt.

Das Verfahren eignet sich insbesondere für das Tiefziehen mit Positiv- oder Negativform, gegebenenfalls mit der bei diesem Verfahren bekannten Unterstützung der Ausformung durch Oberstempel.

Besonders vorteilhaft ist das erfindungsgemäße Verfahren, wenn für Kunststofftafel und Kaschierbahn solche Materialkombinationen ausgewählt werden, die sich durch den beim Warmformvorgang, insbesondere Tiefziehvorgang selbst auftretenden Anpreßdruck und/oder die dabei auftretenden Temperaturen selbst innig verbinden. Damit ist der Auftrag und die Verwendung von Klebematerialien überflüssig, was sowohl den Herstellungsprozeß vereinfacht, als auch das spätere Recycling vereinfacht.

Soll mit der Kaschierbahn eine Oberfläche hergestellt werden, bei der eine solche Materialkombination nicht möglich ist, kann auch eine mehrschichtige oder mehrlagige Kaschierbahn gewählt werden, auf der der Kunststofftafel zugewandten Seite eine Materialschicht aufgebracht ist oder wird, die sich beim Tiefziehen mit der Kunststofftafel verbindet. Damit bleibt der für den Herstellungsprozess beschriebene Vorteil erhalten und die Verbindung der Materialien innerhalb der mehrschichtigen Kaschierbahn kann durch andere Prozesse bei deren Herstellung gelöst werden.

Unter einer mehrlagigen Kaschierbahn wird in diesem Zusammenhang die Verwendung einer aus einem dritten Material bestehenden zusätzlichen Zwischenbahn verstanden, die sich dann besonders anbietet, wenn die Materialien der Kunststofftafel und der Kaschierbahn keine oder keine ausreichend zuverlässige materialschlüssige Verbindung miteinander eingehen, aber beide Materialien eine solche Verbindung mit dem Material der Zwischenbahn eingehen.

Als Materialien für die Kaschierbahn eignen sich dabei insbesondere Folien, Nadelvlies und Textilien aller Art, insbesondere aus Baumwolle, Polyamid, Polyester oder Polypropylen, weiter TPE- oder PVC-Schaumfolien und vernetzte Schaumfolien auf Basis Polyurethan, Polyethylen oder Polypropylen. Desweiteren eignen sich Partikelschäume, z. B. Polypropylenpartikelschaum.

Der Aufbau der Kaschiermaterialien wie Gewebe, Gewirke, Gestricke, Flächengewicht, Dehnfähigkeit, etc. ist abhängig von den gewünschten Radien und der beim Tiefziehen auftretenden Materialstreckung auszuwählen.

Als Trägermaterial für die Kaschierung eignen sich besonders Kunststofftafeln, die eine hohe Steifigkeit (hoher E-Modul) aufweisen, beispielsweise Kunststofftafeln aus glasfaser-, naturfaser- oder talkumverstärktem Polypropylen oder aus glasfaserverstärktem Styrol-Acrylnitril (SAN).

Zur Herstellung von Formteilen mit erhöhten Anforderungen an die mechanische Belastbarkeit und/oder die Temperaturbeständigkeit können vorteilhaft Kaschierbahnen aus Metalldrähten oder -fäden oder anderen hochfesten Werkstoffen verwendet werdenbei denen durch entsprechende Winkellagen der Drähte ein signifikant besseres Eigenschaftsprofil erreicht werden kann.

Vorzugsweise kann bei Wirkware aus Metallfäden oder anderen hochfesten Werkstoffen das Gewirke durch entsprechende Maschenauslgung so flexibel gestaltet werden, das die Herstellung von Formteilen mit großer dreidimensionaler Verformung möglich ist.

In einer Weiterbildung des erfindungsgemäßen Verfahrens besteht die Kaschierbahn aus einem elektrisch leitfähigen Material und ist mit wenigstens einem Kontaktelement versehen, das nach dem Warmformvorgang zugänglich ist.

Die Kaschierung mit einem elektrisch leitfähigen Material eröffnet die Anwendung des Formteiles sowohl als elekromagnetisch abschirmendes Element mit mindestens einem elektrischen Kontaktelement zur Verbindung mit dem Bezugspotential, als auch als beheizbarem Formteil mit wenigstens zwei Kontaktelelementen. Wobei je nach Anwendungsfall gleichzeitig mit der elektrisch leitfähigen Kaschierung als zweite weitere Kaschierung eine dekorative und/oder isolierende Kaschierung im gleichen Arbeitsgang aufgebracht werden kann.

Vorzugsweise werden für wenigstens drei-lagige Formteile, bestehend aus der Kunststofftafel, einer elektrisch leitfähigen, insbesondere Metallkaschierbahn, und einer Dekorkaschierbahn, solche Materialkombinationen ausgewählt, die sich durch den beim Warmformvorgang selbst auftretenden Anpreßdruck und/oder die dabei auftretende Temperatur selbst innig verbinden. Damit wird die elektrisch leitfähige, insbesondere Metallkaschierbahn, zwischen zwei miteinander verschmelzenden Materialien eingelagert.

Besonders vorteilhaft kann die Kaschierbahn über einen separaten Spannrahmen oder endlos über ein Rollensystem in den Raum zwischen Form und Kunststofftafel zugeführt werden.

Um die Lage der Kaschierbahn zum Formteil zu bestimmen und ein urkontrolliertes "Einziehen" in die Form zu verhindern, erfolgt eine mechanische Fixierung der Kaschierbahn zur Form bzw. zum Spannrahmen, wobei die Fixierelemente die beispielsweise als ein festes oder beweglich gelagertes Nadelsystem ausgebildet sein können, die eine Nachgiebigkeit in Richtung der beim Warmformen auftretenden Dehnungen aufweisen können um zu große Materialstreckungen der Kaschierbahn beim Formvorgang zu vermeiden.

Weiter kann die Kaschierbahn so eingebracht werden, daß sie bei einer Positivform die Form bereits ganz oder teilweise umschließt oder bei einer Negativform ganz oder teilweise in den Formraum hineinragt.

Bei einer Kaschierung von Teilflächen sind auf bzw. in der Form selbst entsprechende Fixiereinrichtungen vorzusehen, die beim Herstellungsprozeß ein paßgerechte Auf- bzw. Einlegen ermöglichen und während des Warmformvorganges für eine entsprchende Fixierung der Ränder sorgen, oder die Fixierung kann durch einen separaten Rahmen erfolgen, der beim Tiefziehen von der Kunststofftafel mit umzogen wird und im fertigen Teil verbleibt.

In einer besonderen Weiterbildung der Erfindung wird zur Herstellung beidseitig kaschierter Formteile eine Kunststofftafel verwendet, die bereits eine, auf der der Form angewandten Seite liegende Kaschierung aufweist. Dies kann insbesondere dann von Vorteil sein, wenn die spätere Verwendung des Warmformteils sowohl eine geräuschdämmende Wirkung, die durch eine Kaschierung mit einem Dämmaterial auf einer Seite erreicht werden kann, als auch ein dekoratives Aussehen, das durch eine Kaschierung auf der anderen Seite erreicht werden kann, verlangt.

Im Hinblick auf die Recyclingfähigkeit ist es besonders vorteilhaft, für Trägermaterial (Kunststofftafel) und Kaschierbahn im wesentlichen gleiche Kunststoffmaterialien insbesondere Polypropylen zu verwenden. Dadurch ist eine Trennung von Träger- und Kaschiermaterial bei der Wiederaufarbeitung nicht erforderlich.

Ein Ausführungsbeispiel für die Durchführung der Erfindung wird anhand der Zeichnungen näher erläutert. Dabei zeigen die Figuren 1 bis 4 aufeinanderfolgende Phasen des Verfahrens in einem stark vereinfachten Querschnitt von Form und tiefzuziehendem Material. Wobei in
- Fig. 1: die Phase der Aufheizung einer Kunststofftafel,
- Fig. 2: der Zustand vor dem Tiefziehen,
- Fig. 3: der Zustand nach Abschluß der Formphase,
- Fig. 4: die Zuführung der Kaschierbahn von einer Rolle,
- Fig. 5: eine Varianten der Fixierung der Kaschierbahn mittels eines Spannrahmens,
- Fig. 6a & 6b: einen vergrößerten Teilschnitt durch ein Formteil bestehend aus einer Kunsstofftafel und einer Kaschierbahn, und
- Fig. 7: einen Teilschnitt durch ein Formteil mit einer Kaschierbahn mit elektrischem Kontaktelement.

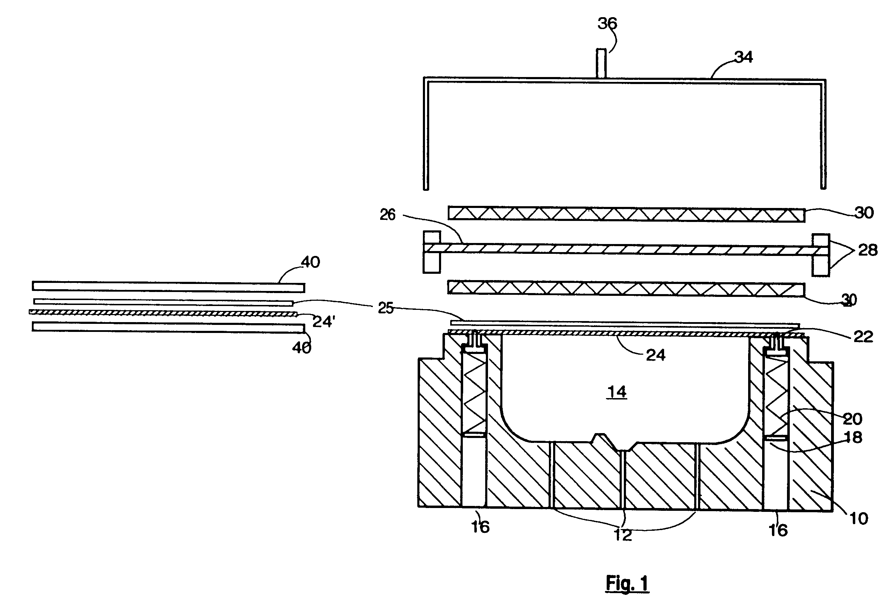

Fig. 1 zeigt einen stark vereinfachten Querschnitt durch eine Negativ-Form 10 mit Saugkanälen 12 und einem wannenförmigen Freiraum 14. Eine in einen Spannrahmen 28 eingespannte Kunststofftafel 26, beispielsweise aus glasfaserverstärktem Polypropylen, wird zwischen zwei Heizelementen 30 auf eine Verformungstemperatur oberhalb des Kristallit-Schmelzpunktes von ca. 160 bis 220°C erwärmt.

Oberhalb der Heizelemente liegt eine Druckglocke 34 mit einem Druckluftanschluß 36.

Eine Kaschierbahn 25, beispielsweise aus einem Metallgewirke, ist bereits über den wannenförmigen Freiraum 14 gelegt und wird über symmetrisch zum Freiraum liegende Nadeln 22 fixiert, mit denen auch eine weitere Kaschierbahn (24) aus Dekormaterial auf der Tiefziehform fixiert wird. Diese Nadeln 22 sind über Federn 20, die sich auf Scheiben 18 in Bohrungen 16 der Negativ-Form 10 abstützen nachgiebig gelagert.

Seitlich dieser Anordnung ist eine Vorwärmeinrichtung, bestehend aus Heizelementen 40, dargestellt, zwischen denen eine Kaschierbahn 24' aus Dekormaterial und eine Kaschierbahn 25' aus einem Metallgewirke erwärmt wird, die für das nächste Warmformteil bestimmt ist.

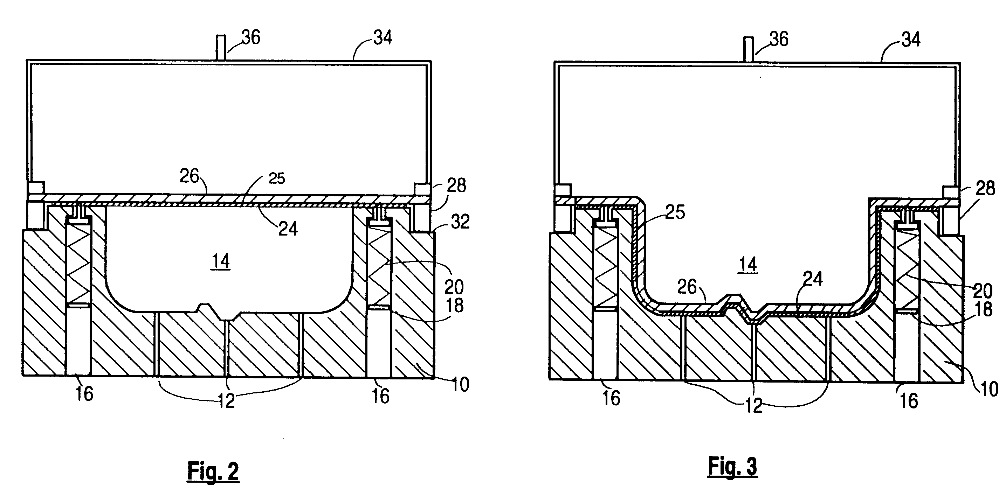

Ist die Verformungstemperatur der Kunststofftafel 26 erreicht, werden die zwischen Kunststofftafel 26, Form 10 und Druckglocke 34 befindlichen Heizelemente 30 entfernt und anschließend Spannrahmen 28 mit der Kunststofftafel 26, Form 10 und Druckglocke 34 zueinander hin bewegt und angepresst (Fig.2). In der Regel wird die Form 10 zum Spannrahmen 28 hin bewegt. Durch die Anpressung wird der Spannrahmen 28 gegen eine Schulter 32 der Form 10 gedrückt, der Rand der Druckglocke wird auf den oberen Abschluß des Spannrahmens gedrückt, um einen luftdichten Abschluß zu erreichen. Dieser kann durch jeweils eine zwischenliegende, nicht dargestellte Dichtung verbessert werden.

Nun wird der wannenförmige Freiraum 14 durch die Saugkanäle 12 evakuiert. Synchronisiert mit der Evakuierung des Freiraums 14 wird über den Druckluftanschluß 36 Druckluft zugeführt und Kunststofftafel 26 und die Kaschierbahnen 24, 25 zusätzlich in die Form gepreßt. Die Kaschierbahnen 24, 25 und die Kunststofftafel 26 werden in die Form 10 gezogen und gepreßt, bis der in Fig. 3 gezeigte Zustand erreicht wird, in dem die Kaschierbahnen 24, 25 und die verformte Kunststofftafel 26 innig an der Innenwand der Form 10 anliegen. Bei diesem Tiefziehvorgang verbinden sich die Kaschierbahnen 24, 25 und die verformte Kunststofftafel 26 materialschlüssig.

Nach dem üblichen Abkühlvorgang kann das so kaschierte Formteil entnommen werden und die übliche Bearbeitung der Ränder o.ä. erfolgen.

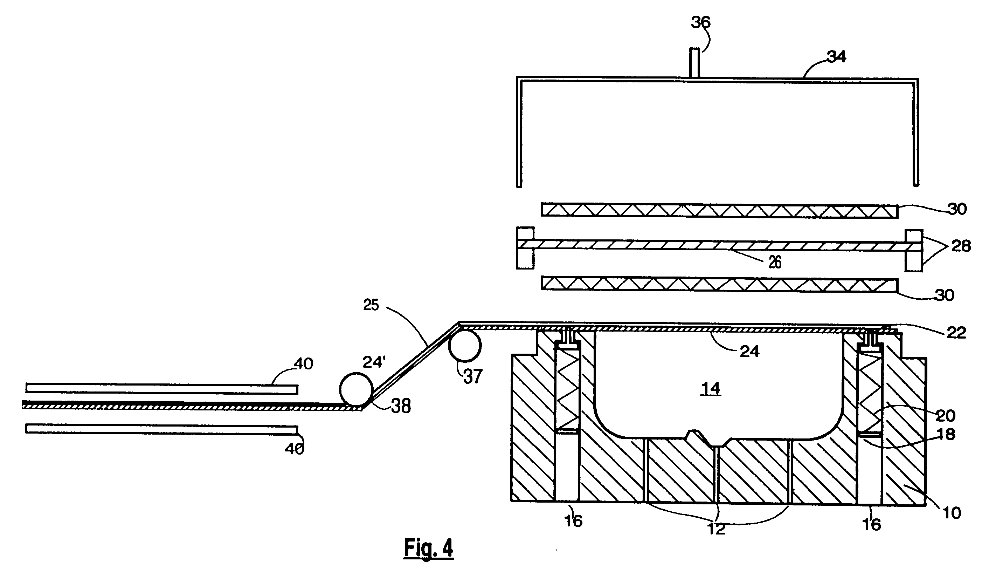

Fig. 4 zeigt eine mögliche Ausführungsform bei der die Zuführung der Kaschierbahnen 24, 25 über ein Rollensystem 37, 38 von einer nicht dargestellten Rolle erfolgt. Wie aus der Fig. 4 zu erkennen ist, wird zur Fixierung vor dem Warmformvorgang das in Fig. 1 beschriebene Nadelsystem verwendet. Andere Zuführungen/Fixierungen wie beispielsweise Kettensysteme sind ebenfalls möglich.

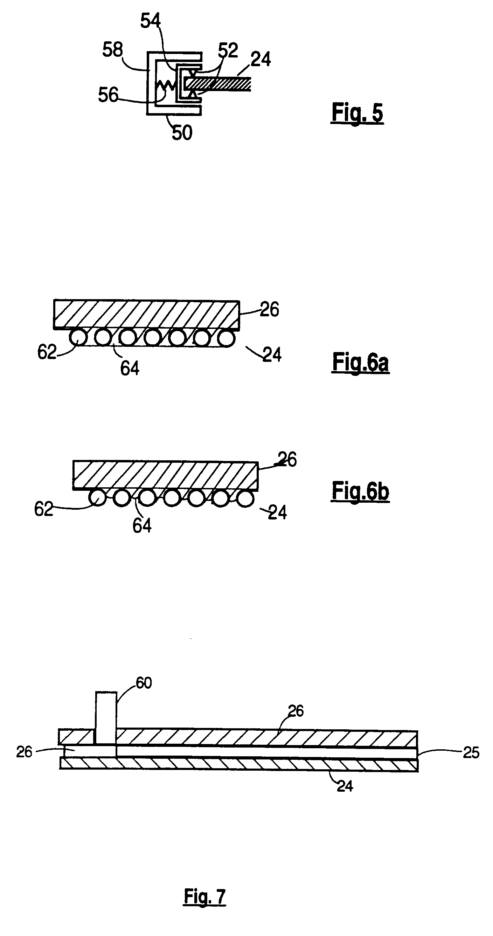

Fig. 5 zeigt eine Variante der Fixierung einer Kaschierbahn, bei der die Kaschierbahn nicht durch ein Nadelsystem auf der Form fixiert wird, sondern in einem separaten Spannrahmen 50 gehalten wird

In diesem Spannrahmen 50 wird die Kaschierbahn 24 zwischen Nadeln 52 eingeklemmt, deren U-förmiger, im Spannrahmen 50 frei schwebender Träger 54 durch eine Feder 56 gegen eine Seitenwand 58 des Spannrahmens 50 gelagert ist. Durch die Federkräfte der Feder 56 wird ein kontrolliertes Nachgeben auf die beim Warmformvorgang auftretenden Zugkräfte ermöglicht und damit ein kontrolliertes "Einziehen" in die Form ermöglicht.

Fig. 6a zeigt einen vergrößerten Teilschnitt durch ein Formteil bestehend aus einer Kunststofftafel und einer Kaschierbahn, bei dem deutlich wird, daß das Material der Kunststoffplatte 26 sehr weit in die Lücken 64 zwischen den Maschen 62 der Kaschierbahn 24 eingedrungen ist, und damit die Struktur der Kaschierbahn teilweise überdeckt.

Bei einer Kaschierbahn aus einem Material, das nur durch Einschluß haftet ist damit eine nahezu unlösbare Verbindung gegeben.

Ist diese Überdeckung dagegen unerwünscht, da es sich um eine dekorative Kaschierung handelt und/oder die verwendeten Materialien können zumindest teilweise miteinander verschmelzen, kann durch die Verwendung einer niedrigeren Temperatur der Kunststofftafel bei gleichzeitig höherem Druck das Eindringen auf ein Maß reduziert werden wie es in Fig. 6b dargestellt ist.

Fig. 7 zeigt einen Teilschnitt durch ein Formteil mit einer Kaschierbahn 25 mit einem elektrischem Kontaktelement (60). Die elektrisch leitfähige Kaschierbahn 25 ist in diesem Beispiel eingeschlossen zwischen einer dekorativen und/oder elektrisch isloierenden Kaschierbahn 24 und einer Kunststofftafel 26. Soweit möglich und erforderlich ist die elektrisch leitfähige Kaschierbahn 25 mit einer Stromleitfolie 62 verbunden um eine flächige kontaktierung der beispielsweise gewirkten Kaschierbahn zu ermöglichen. Mit dieser Stromleitfolie 62 mechanisch und elektrisch verbunden ragt das Konaktelement 60, bei dem es sich um einen Stecker, eine Buchse, Lötfahne oder andere zur elektrischem Kontaktierung geeigente Formen handeln kann, über die umgebende Oberflächen der Kunststofftafel 26 hinaus. Abhängig von der verwendeten Kunststofftafel und der Formgebung des Kontaktelements, kann diese die Kunststofftafel beim Tiefziehen durchdringen, sodaß in einem nachfolgenden Arbeitsgang nur noch anhaftendes Kunststoffmaterial entfernt veren muß, oder es bildet sich ein "Kappe" über dem Kontakt die bei Bedarf abgetrennt werden muß.

Selbsverständlich kann das Konaktelelement in gleicher Weise auch so angebracht werden, daß es die dekorative Kaschierbahn durchdringt.

## Patentansprüche

1. Verfahren zum Herstellen eines Warmformteils bestehend aus einer Kunststofftafel (26) aus einem warmverformbaren, thermoplastischen Kunststoff, Kunststoffgemisch oder einer Kunststoffmatrix, bei dem vor dem Warmformvorgang in den Raum (14) zwischen der Kunststofftafel (26) und einer Tiefziehform (10) wenigstens eine verformbare Kaschierbahn (24, 25) eingebracht wird, wobei die verformbare Kaschierbahn (24, 25)
aus einem Material besteht, das sich unter den beim Warmformvorgang auftretenden Unterdruck- und Temperaturbedingungen streckt und/oder
aus einem Material besteht, das sich selbst unter den beim Warmformvorgang auftretenden Unterdruck- und Temperaturbedingungen nicht streckt, jedoch durch seine Vermaschung oder Winkellageveränderung flächig verformbar ist, und wobei die einen Anpreßdruck bewirkenden Unterdruckbedingungen und die
Temperaturbedingungen des Warmformvorganges so eingestellt werden, daß sich Kunststofftafel und Kaschierbahn *direkt* durch Einlagerung und/oder Verschmelzung unlösbar miteinander verbinden,
dadurch gekennzeichnet, *daß der Anpressdruck durch zusätzliche Druckluftunterstützung erhöht wird*.

2. Verfahren nach Anspruch 1, dadurch gekennzeichnet, daß das kaschierte Warmformteil durch Tiefziehen hergestellt wird.

3. Verfahren nach wenigstens einem der vorherigen Ansprüche, dadurch gekennzeichnet, daß die Kaschierbahn (24,25) über einen separaten Spannrahmen (50) oder endlos über ein Rollensystem (37,38) zugeführt wird.

4. Verfahren nach einem der vorherigen Ansprüche, dadurch gekennzeichnet, daß die Kaschierbahn (24, 25) auf der Form (10) bzw. zum Spannrahmen (50) mechanisch fixiert wird, wobei die Fixierelemente auch eine Nachgiebigkeit in Richtung der beim Warmformen auftretenden Dehnungen (Zugkräfte) aufweisen können.

5. Verfahren nach einem der vorherigen Ansprüche, dadurch gekennzeichnet, daß eine Kunststofftafel (26) verwendet wird, die bereits auf der formabgewandten Seite eine Kaschierung aufweist.

6. Verfahren nach einem der vorherigen Ansprüche dadurch gekennzeichnet, daß eine mehrschichtige oder mehrlagige Kaschierbahn (24, 25) verwendet wird.

7. Verfahren nach einem der vorherigen Ansprüche, dadurch gekennzeichnet, daß für eine partielle Kaschierung eines Warmformteils ein separater Rahmen für die Kaschierbahnfixierung verwendet wird, der mit dem darauf befestigten Kaschiermaterial in die Tiefziehform eingelegt wird und formschlüssig von der Kunsstofftafel beim Tiefziehvorgang umzogen wird.

8. Verfahren nach einem der vorherigen Ansprüche, dadurch gekennzeichnet, daß eine Kunststofftafel (26) aus glasfaser-, talkum oder naturfaserverstärktem oder geschäumtem Polypropylen verwendet wird.

9. Verfahren nach einem der Ansprüche 1 bis 7, dadurch gekennzeichnet, daß eine Kunststofftafel (26) aus glasfaserverstärktem Styrol-Acrylnitril (SAN) verwendet wird.

10. Verfahren nach einem der vorhergehenden Ansprüche, dadurch gekennzeichnet, daß für Kunststofftafel (26) und Kaschierbahn (24), die unter den beim Warmformvorgang auftretenden Druck- und Temperaturbedingungen streckbar ist, solche Materialkombinationen ausgewählt werden, die sich durch den beim druckluftunterstützen Tiefziehvorgang selbst auftretenden Anpreßdruck und/oder die dabei auftretenden Temperaturen selbst innig verbinden.

11. Verfahren nach einem der vorherigen Ansprüche, dadurch gekennzeichnet, daß als aufzukaschierendes Material (24) Folien, Nadelvlies und Textilien aller Art, insbesondere aus Baumwolle, Polyamid, Polyester oder Polypropylen, Polyethylen oder PVC-Schaumfolien oder Schaumfolien auf Basis Polyurethan (PUR), Polyethylen (PE) oder Polypropylen (PP) und Partikelschäume, z. B. auf PP-Basis verwendet werden.

12. Verfahren nach wenigstens einem der vorhergehenden Ansprüche, dadurch gekennzeichnet, daß insbesondere bei Verwendung von unter den beim Warmformvorgang auftretenden Druck- und Temperaturbedingungen streckbarer Kaschierbahn, die Kaschierbahn (24) mindestens einseitig vor dem Tiefziehvorgang soweit vorgewärmt wird (40) , daß eine deutliche Herabsetzung des E-Moduls auftritt, jedoch keine anderen wesentlichen Materialeigenschaften verändert werden.

13. Verfahren nach wenigstens einem der Ansprüche 1 bis 9, dadurch gekennzeichnet, daß als Kaschierbahn (25), deren Material sich selbst nicht unter den beim Warmformvorgang auftretenden Druck- und Termperaturverhältnissen streckt, Kaschierbahnen aus Metalldrähten oder -fäden oder anderen hochfesten Werkstoffen wie, z.B. Glas- oder Kohlestoffaser oder nachwachsende Rohstoffe, verwendet wird.

14. Verfahren nach Anspruch 13, dadurch gekennzeichnet, daß durch entsprechende Winkellagen der Metalldrähte oder -fäden oder anderen hochfester Werkstoffe das Formteil ein signifikantes Eigenschaftsprofil erfährt.

15. Verfahren nach Anspruch 13, dadurch gekennzeichnet, daß die Wirkware aus Metallfäden oder anderen hochfesten Werkstoffen verwendet wird, die durch entsprechende Maschenkonstruktion flexibel gestaltet ist.

16. Verfahren nach Anspruch 15, dadurch gekennzeichnet, daß das Drahtgewirke mit einer ein- oder mehrschichtigen Folie kaschiert wird.

17. Verfahren nach einem der Ansprüche 13 bis 16, dadurch gekennzeichnet, daß durch entsprechende Auslegung der Metallarmierung und des Trägermaterials hochfeste und hochtemperaturbeständige Formteile entstehen.

18. Verfahren nach wenigstens einem der vorherigen Ansprüche, dadurch gekennzeichnet, daß eine elektrisch leitfähige Kaschierbahn (25, Fig. 7), die mit wenigstens einem Kontaktelement (60) versehen ist, das nach dem Warmformvorgang zugänglich ist, verwendet wird.

19. Verfahren nach Anspruch 18, dadurch gekennzeichnet, daß durch entsprechende Auslegung der elektrisch leitfähigen Kaschierbahn (25), insbesondere Metallgewirke, Formteile für die elektromagnetische Abschirmung entstehen und /oder durch Anlegen einer Spannung beheizbare Formteile entstehen.

20. Verfahren nach einem der Ansprüche 14 bis 19, dadurch gekennzeichnet, daß für wenigstens drei-lagige Formteile für Kunststofftafel (24) und Metallarmierung (25) und Dekormaterial (26) solche Materialkombinationen ausgewählt werden, die sich durch den beim Warmformvorgang selbst auftretenden Anpreßdruck und/oder die dabei auftretenden Temperaturen selbst innig verbinden.

## Claims

1. A method for producing a hot-molded part comprising a plastic slab (26) of a heat-deformable thermoplastic plastic, plastic mixture or plastic matrix, in which before the hot-forming operation, at least one deformable lining strip (24, 25) is introduced into the space (14) between the plastic slab (26) and a deep-drawing mold (10), wherein the deformable lining strip (24, 25),
comprises a material which stretches under the negative pressure and temperature conditions occurring in the hot-forming operation, and/or
comprises a material which itself does not stretch under the negative pressure and temperature conditions occurring in the hot-forming operation, but is two- dimensionally deformable as a result of its mesh structure or change in angular position, and wherein the negative pressure conditions, which bring about a contact pressure, and the temperature conditions of the hot-forming operation are adjusted such that the plastic slab and lining strip are joined inseparably to one another directly by incorporation and/or melting,
characterized in that the contact pressure is increased by additional compressed air reinforcement.

2. The method of claim 1, characterized in that the lines hot-molded part is produced by deep-drawing.

3. The method of at least one of the foregoing claims, characterized in that the lining strip (24, 25) is supplied via a separate tentering frame (50) or in endless fashion via a roller system (37, 38).

4. The method of one of the foregoing claims, characterized in that the lining strip (24, 25) is fixed mechanically on the mold (10) or onto the tentering frame (50), and the fixing elements may also have resilience in the direction of the elongations (tensile forces) occurring in the hot molding.

5. The method of one of the foregoing claims, characterized in that a plastic slab (26) which already has a lining on the side remote from the mold is used.

6. The method of one of the foregoing claims, characterized in that a multi-layered or multi-ply lining strip (24, 25) is used.

7. The method of one of the foregoing claims, characterized in that for a partial lining of a hot-molded part, a separate frame for the lining strip fixation is used, which is placed, with the lining material secured to it, in the deep-drawing mold and is enclosed in form-locking fashion by the plastic slab in the deep-drawing operation.

8. The method of one of the foregoing claims, characterized in that a plastic slab (26) of glass-fiber-, talcum- or natural-fiber-reinforced or foamed polypropylene is used.

9. The method of one of claims 1-7, characterized in that a plastic slab (26) of glass-fiber-reinforced styrene acrylonitrile (SAN) is used.

10. The method of one of the foregoing claims, characterized in that for the plastic slab (26) and the lining strip (24), which is stretchable under the pressure and temperature conditions that occur in the hot-forming operation, combinations of material are selected of a kind that bond intimately on their own as a result of the contact pressure occurring in the compressed-air-reinforced deep drawing operation itself and/or the temperatures occurring in this operation.

11. The method of one of the foregoing claims, characterized in that films, needle felt and textiles of all types, particularly of cotton, polyamide, polyester or polypropylene, polyethylene or PVC foam sheets or foam sheets based on polyurethane (PUR), polyethylene (PE) or polypropylene (PP) and particle foams, for instance based on polypropylene, are used as the lining material (24).

12. The method of at least one of the foregoing claims, characterized in that particularly when a lining strip that is stretchable under the pressure and temperature conditions occurring in the hot-forming operation is used, the lining strip (24) is preheated (40) on at least one side before the deep drawing operation to such an extent that a marked drop in the modulus of elasticity occurs, but no other essential material properties are changed.

13. The method of at least one of claims 1-9, characterized in that lining strips comprising metal wires or filaments or other high-strength materials, such as glass or carbon fibers or renewable resources, are used as the lining strip (25) whose material does not itself stretch under the pressure and temperature conditions occurring in the hot-forming operation.

14. The method of claim 13, characterized in that the molded part is given a major property profile by means of corresponding angular positions of the metal wires or filaments or other high-strength materials.

15. The method of claim 13, characterized in that the meshlike article of metal filaments or other high-strength material which is designed to be flexible by means of a suitable mesh construction is used.

16. The method of claim 15, characterized in that the wire mesh structure is lined with a single- or multi-layer film or sheet.

17. The method of one of claims 13-16, characterized in that high-strength and high-temperature-resistant molded parts are produced by means of suitable design of the metal armoring and the substrate material.

18. The method of at least one of the foregoing claims, characterized in that an electrically conductive lining strip (25, Fig. 7), which is provided with at least one contact element (60) that is accessible after the hot- forming operation, is used.

19. The method of claim 18, characterized in that by suitable design of the electrically conductive lining strip (25), in particular metal mesh structures, molded parts for electromagnetic shielding are produced, and/or heatable molded parts are produced by applying a voltage.

20. The method of one of claims 14-19, characterized in that for at least three-ply molded parts, material combinations of kinds that bond intimately on their own by the contact pressure occurring in the hot-forming operation itself and/or the temperatures occurring in that operation, are selected for the plastic slab (24) and the metal armoring (25) and decorative material (26).

## Revendications

1. Procédé de fabrication d'une pièce formée à chaud, comprenant une plaque en matière synthétique (26) formée d'une matière plastique déformable à chaud ou d'un mélange de matières plastiques ou d'une matrice en matière plastique thermoplastique pouvant être déformés à chaud, dans lequel, avant l'opération de thermoformage, on introduit dans l'espace (14) compris entre la plaque en matière plastique (26) et un moule d'emboutissage (10) au moins une bande de doublure déformable (24, 25), la bande de doublure déformable (24, 25):
- étant constituée d'un matériau qui s'étend dans les conditions de dépression et de température présentes lors de l'opération de thermoformage et/ou;
- étant constituée d'un matériau qui ne s'étend pas, même dans les conditions de dépression et de température présentes lors de l'opération de thermoformage, mais qui est déformable en deux dimensions par son maillage ou son changement de position angulaire, les conditions de dépression qui génèrent une pression d'appui et les conditions de température de l'opération de thermoformage étant réglées de façon à ce que la plaque en matière plastique et la bande de doublure se lient *directement* de façon indétachable par inclusion et/ou fusion, caractérisé en ce que la pression d'appui est augmentée par un apport supplémentaire d'air comprimé.

2. Procédé selon la revendication 1, caractérisé en ce que la pièce thermoformée doublée est réalisée par emboutissage.

3. Procédé selon au moins l'une des revendications précédentes, caractérisé en ce que la bande de doublure (24, 25) est amenée par l'intermédiaire d'un cadre de serrage (50) séparé ou en continu par l'intermédiaire d'un système à rouleaux (37, 38).

4. Procédé selon l'une des revendications précédentes, caractérisé en ce que la bande de doublure (24, 25) est fixée par des moyens mécaniques sur le moule (10) ou dans le cadre de serrage (50), les éléments de fixation pouvant présenter également une élasticité en direction des extensions (efforts de traction) se produisant lors du thermoformage.

5. Procédé selon l'une des revendications précédentes, caractérisé en ce qu'on utilise une plaque en matière plastique (26) présentant déjà une doublure sur la face opposée au moule.

6. Procédé selon l'une des revendications précédentes, caractérisé en ce que l'on utilise une bande de doublure (24, 25) à plusieurs couches.

7. Procédé selon l'une des revendications précédentes, caractérisé en ce que pour une doublure partielle d'un pièce thermoformée, on utilise pour fixer la bande de doublure un cadre séparé qui est placé, portant le matériau de doublure, dans le moule d'emboutissage et entouré, lors de l'opération d'emboutissage, par la plaque en matière plastique.

8. Procédé selon l'une des revendications précédentes, caractérisé en ce que l'on utilise une plaque en matière plastique (26) en polypropylène moussé ou renforcé par des fibres de verre, du talc ou des fibres naturelles.

9. Procédé selon l'une des revendications 1 à 7, caractérisé en ce que l'on utilise une plaque en matière plastique (26) en acrylonitrile-styrène (ANS) renforcé par des fibres de verre.

10. Procédé selon l'une des revendications précédentes, caractérisé en ce que pour la plaque en matière plastique (26) et la bande de doublure (24), qui est extensible dans les conditions de pression et de température présentes lors de l'opération de thermoformage, on choisit des combinaisons de matériaux se liant intimement l'une à l'autre sous la pression d'appui se produisant lors de l'opération d'emboutissage soutenue par de l'air comprimé et/ou par les températures en présence.

11. Procédé selon l'une des revendications précédentes, caractérisé en ce qu'en tant que matériau de doublure (24) on utilise des films, des non-tissés ou des textiles de toute sorte, notamment en coton, polyamide, polyester ou polypropylène, en polyéthylène ou en films moussés PVC ou en films moussés à base de polyuréthane (PUR), de polyéthylène (PE) ou de polypropylène (PP), et des mousses à particules, par exemple à base de PP.

12. Procédé selon au moins l'une des revendications précédentes, caractérisé en ce que, notamment en utilisant une bande de doublure extensible dans les conditions de pression et de température présentes lors de l'opération de thermoformage, la bande de doublure (24) est préchauffée (40) au moins sur une face avant l'opération d'emboutissage jusqu'à ce qu'une diminution significative du module d'Young E se produise, sans toutefois modifier d'autres propriétés essentielles du matériau.

13. Procédé selon au moins l'une des revendications 1 à 9, caractérisé en ce qu'en tant que bande de doublure (25), dont le matériau ne s'étend pas, même dans les conditions de pression et de température présentes lors de l'opération de thermoformage, on utilise des bandes de doublure en fils métalliques ou d'autres matériaux à haute résistance, tels que des fibres de verre ou de carbone ou des matières premières à croissance postérieure.

14. Procédé selon la revendication 13, caractérisé en ce que la pièce formée reçoit un profil de propriété significatif grâce à des positions angulaires appropriées des fils métalliques ou d'autres matériaux à haute résistance.

15. Procédé selon la revendication 13, caractérisé en ce que l'on utilise un tissu à mailles en fils métalliques ou en d'autres matériaux à haute résistance, qui est rendu flexible par une construction de mailles appropriée.

16. Procédé selon la revendication 15, caractérisé en ce que le tissu à fils est doublé par un film à une ou plusieurs couches.

17. Procédé selon l'une des revendications 13 à 16, caractérisé en ce que l'on obtient des pièces formées à haute résistance et résistant à des températures élevées par une conception appropriée de l'armature métallique et du matériau de support.

18. Procédé selon au moins l'une des revendications précédentes, caractérisé en ce que l'on utilise une bande de doublure (25, figure 7) à conduction électrique pourvue d'au moins un élément de contact (60) qui est accessible après l'opération de thermoformage.

19. Procédé selon la revendication 18, caractérisé en ce que par une conception appropriée de la bande de doublure (25) à conduction électrique, notamment des tissus métalliques, on obtient des pièces formées pour le blindage électromagnétique et/ou des pièces formées pouvant être chauffées par application d'une tension.

20. Procédé selon l'une des revendications 14 à 19, caractérisé en ce que pour des pièces formées à au moins trois couches, on choisit pour la plaque en matière plastique (24) et l'armature métallique (25) et pour le matériel de décoration (26) des combinaisons de matériaux qui se lient intimement par la pression d'appui présente lors de l'opération de thermoformage et/ou par les températures en présence.
